# EUROPEAN PATENT SPECIFICATION

(11) **EP 0 555 986 B1**
(45) Date of publication and mention of the grant of the patent: **16.04.1997**
(21) Application number: 93300790.8
(22) Date of filing: 03.02.1993
(51) Int. Cl.: B29C 69/00

(54) **Method of molding diaphragm for gas meter**
Verfahren zum Formen einer Membrane für ein Gasmessgerät
Procédé pour mouler une membrane pour compteur à gaz

(30) Priority: 13.02.1992 JP 58809/92
(43) Date of publication of application: 18.08.1993
(73) Proprietor: TOYO TIRE & RUBBER CO., LTD ., Nishi-ku, Osaka-shi, Osaka-fu (JP)
(72) Inventor: Tamura, Seiji, Toyo Tire & Rubber Co., Ltd., Fukushima-shi, Fukushima-ken (JP); Tazaki, Kazuyuki, Toyo Tire & Rubber Co., Ltd., Fukushima-shi, Fukushima-ken (JP)
(74) Representative: Dealtry, Brian

(56) References cited:
- US-A- 4 057 447
- US-A- 4 076 891
- US-A- 4 439 123

## Description

### BACKGROUND OF THE INVENTION

This invention relates to a method of forming diaphragm in which in a forming process of diaphragms, unvulcanized rubber composition for forming packings is poured into a lower mold for diaphragm forming, and the unvulcanized rubber composition filled in the mold together with a diaphragm forming film are heat treated to mold the packing integrally at a preset position of the diaphragm.

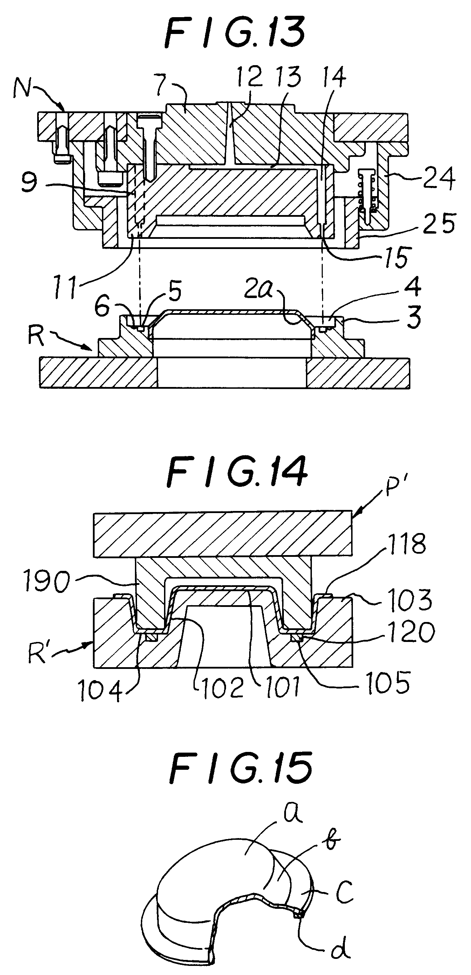

For example, well known diaphragm to be used for gas meter has, as shown in FIG. 15, a circular flat top surface (a), an aslant peripheral surface (b) developed in the shape of an unfolded fan from the periphery of the top surface (a) and a horizontal peripheral surface (c) developed to be in parallel to the top surface (a), and a packing (d) is integrally fixed on one surface of the horizontal peripheral surface (c).

As one of methods of forming the diaphragm of this kind, a method is well known in which, as shown in FIG. 14, a packing 120 molded previously in semi-cure condition in a lower mold R' for diaphragm forming is inserted into a groove portion 105 for packing provided on a bottom surface of an enclosing groove portion 104 formed between an aslant peripheral side surface 102 of a convex type surface and an enclosing frame 103 rising in a direction identical with a direction where the convex type surface rises which is provided on a periphery of the outside, said convex type surface consisting of a horizontal top surface 101 and the surface 102, and then, the unvulcanized diaphragm forming film 118 is mounted on the mold R' to be coupled with an upper mold P', and in order to mold a portion of the diaphragm forming film 118 that should become the horizontal peripheral surface c of the diaphragm, a pressure portion 190 of the upper mold P' is coupled with the enclosing groove portion 104 of the lower mold R' whereby the diaphragm forming film 118 and the packing 120 are applied with pressure, and the diaphragm forming film is heat treated in the condition where the horizontal top surface 101 of the lower mold R' and the aslant peripheral side surface 102 are caused to contact, and a thermal contraction is caused on a base cloth of the diaphragm forming film 118, and the packing 120 and a rubber layer of the diaphragm forming film 118 are vulcanized, and the packing 120 is caused to be integrally fixed to the horizontal peripheral surface c of the diaphragm forming film 118, whereby the diaphragm along the profile of the mold as shown in FIG. 15 can be molded.

In the method of forming diaphragm set form in the conventional technique, operations to supply the packing molded in semicure condition beforehand to the groove portion 105 for packing the mold R' are carried out by manual work using human power, but the frame type packing 120 is pliable, and lacks a shape holding power so that the placing of the packing 120 into the groove portion 105 for packing accurately by hand requires careful operation and many hours even if they involve with semi-cure.

On the other hand, in the case of the diaphragm having high precision such as diaphragm for gas meter, dimensions of the packing are required to be as accurate as possible, but the packing molded by a hot press and the mold in conventional method cannot be escaped from non-uniformity particularly in width and thickness.

In US 4076891 there is disclosed a method of producing plastic-rubber composite articles such as valve diaphragms wherein a substantially linear crystalline low pressure solution olefin polymer whilst in a molten state is brought into contact with a prevulvanized rubber component containing up to 70 percent by volume of a rubbery olefin polymer.

### SUMMARY OF THE INVENTION

An object of this invention is to provide a diaphragm of high precision provided with a packing of uniform width and thickness by filling directly an unvulcanized rubber composition for packing into a groove portion for packing of the lower mold for diaphragm forming prior to the forming of the diaphragm, applying a heat treatment to the rubber composition disposed in the mold together with the uncured diaphragm forming film at low temperatures for long hours.

According to the present invention there is provided a method as recited in claim 1.

Another object of this invention is to provide a diaphragm of high precision provided with a packing having uniform width and thickness by vulcanizing both the packing and the diaphragm forming film at low temperature for long hours, said materials being vulcanizing system most preferable for rubber diaphragm of this kind since the rubber materials poured and filled in the groove portion of the lower mold prior to the forming of the diaphragm are unvulcanized rubber materials prior to the forming of the diaphragm which are similar to the rubber materials of the diaphragm forming film.

A further object of this invention is to provide a method of forming diaphragm capable of improving a productivity providing a packing mold with a coupling of the lower mold for diaphragm forming with a rubber extruder, directly pouring and filling the rubber composition for packing to a groove portion for packing of the lower mold for diaphragm forming by the rubber extruder prior to the forming of the diaphragm, separating the rubber extruder from the lower mold, coupling the upper mold for diaphragm forming with the lower mold to prepare the mold for diaphragm forming, conducting the heat vulcanizing forming of the packing and the heat vulcanizing forming of the diaphragm continuously, and eliminating the manual work of placing the vulcanized or semi-cure packing into the lower mold.

A yet another object of this invention is to allow the forming of the packing by coupling the lower mold with the rubber extruder in which a runner block integrally superposed with a lower surface of a sprue bush has a concave surface portion avoiding horizontal top surface of the lower mold and its lower surface has a projecting frame portion being a division surface which comes to contact with the bottom surface of the enclosing groove portion and its upper surface is provided with a gate communicating with the groove portion for packing of the lower mold at a tip of a vertical runner passing through the projecting frame portion from one or a plurality of horizontal runners extending in radial direction which communicates with the sprue, and the lower surface of the projecting frame portion of the rubber extruder is in contact with the bottom surface of the enclosing groove portion 4 of the lower mold and the gate is positioned to be communicated with the groove portion for packing whereby the unvulcanized rubber composition is poured and filled in the groove portion for packing to perform the forming of the packing.

A still further object of this invention is to allow a standing vent only in a vent standing groove of the lower mold by providing a saucer type vent standing groove on the division surface of the enclosing groove portion of the lower mold for forming and the projecting frame portion of the rubber extruder along an entire outside edge in contact with the groove portion for packing provided on the bottom surface of the enclosing groove portion and providing a vent groove communicating with an almost middle of the vent standing groove on the lower surface of the projecting frame portion.

A further object of this invention is to allow the pouring and filling of the rubber composition for packing from a plurality of locations at fixed intervals to the groove portion of packing by providing a circular runner of a preset radius centering the sprue on the upper surface of the runner block superposed integrally on the sprue bush, providing a large number of horizontal runners from this circular runner radially, connecting vertical runners passing through the projecting frame portion at each horizontal runner, and providing a gate communicating with the groove portion for packing of the lower mold on the tip of each of the vertical runners.

A still further object of this invention is to provide circular slit gates by connecting the circular and vertical runners circling the runner block with the large number of the horizontal runners.

A still further object of this invention is to provide a vacuum block 23 for stationary and a vacuum block 24 for mobile in the rubber extruder which are fixed to the base 1 so that they enclose the runner blocks.

### BRIEF DESCRIPTION OF THE DRAWINGS

FIG. 1 is a vertical cross section showing a mold for forming and a rubber extruder according to this invention which are separated;
FIG. 2 is a cross section showing a coupled mold for forming and the rubber extruder according to this invention;
FIG. 3 is a plan showing a horizontal runner provided on a top surface of a runner block by partly cutting away a sprue bush of the rubber extruder of this invention;
FIG. 4 is a cross section of enlarged essential portion showing a vent standing and a vent groove provided on a division surface between the bottom surface of an enclosing groove portion of the mold for forming and the lower surface of the projecting frame portion of the rubber extruder according to this invention;
FIG. 5 is a cross section showing a coupled upper mold with the mold for forming according to this invention;
FIG. 6 is a plan showing a plurality of horizontal runners provided on the upper surface of the runner block by partly cutting away the sprue bush of another rubber extruder according to this invention;
FIG. 7 is a plan showing a plurality of horizontal runners and circular and vertical runners provided on the upper surface of the runner block by partly cutting away the sprue bush of another rubber extruder according to this invention;
FIG. 8 is a vertical cross section showing another rubber extruder and the mold for forming according to this invention which are separated;
FIG. 9 is a vertical cross section showing the mold for forming having a convex type surface whose peripheral side surface is of aslant and the rubber extruder which are separated according to this invention;
FIG. 10 is a vertical cross section showing a coupled mold for forming having a convex type surface whose peripheral side surface is of aslant and the rubber extruder according to this invention;
FIG. 11 is a cross section of an enlarged essential portion showing a vent standing and a vent groove provided on a division surface between the bottom surface of the enclosing groove portion of the mold for forming having a convex type surface whose peripheral side surface is of aslant and the lower surface of the projecting frame portion of the rubber extruder according to this invention;
FIG. 12 is a vertical cross section showing a coupled mold for forming having a convex type surface whose peripheral side surface is of aslant and the upper mold according to this invention;
FIG. 13 is a vertical cross section showing another rubber extruder having a convex type surface whose peripheral side surface is of aslant and the mold for forming according to this invention;
FIG. 14 is a vertical cross section showing a coupled conventional mold for forming with the extruder; and
FIG. 15 is a perspective view showing by partly cutting away a diaphragm.

### DETAILED DESCRIPTION OF THE INVENTION

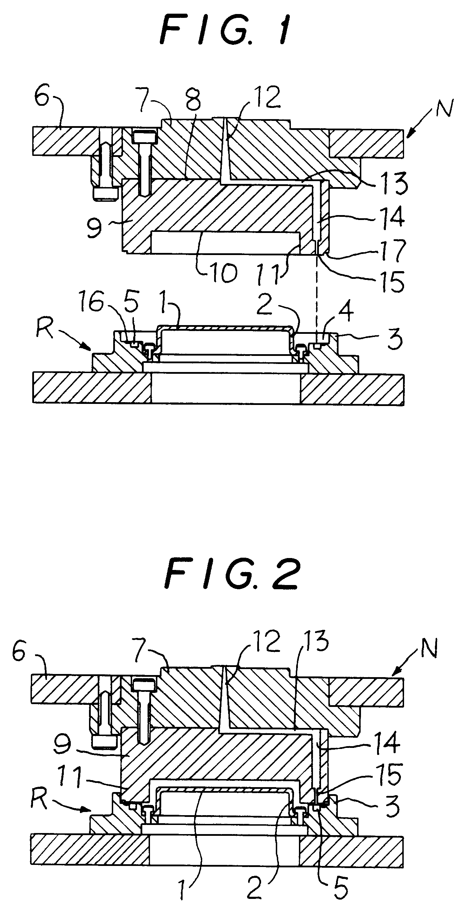

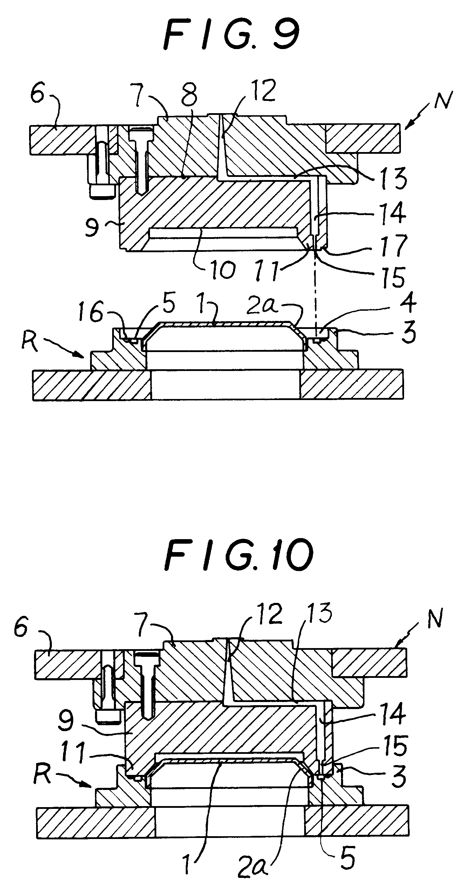

An embodiment of this invention will be explained by referring to the drawings, in which FIG. 1 is a vertical cross section showing a lower mold R for diaphragm forming and a rubber extruder N for filling a rubber composition for packing in the lower mold R which are in separated condition. The lower mold R is provided with a horizontal top surface 1 and a vertical peripheral side surface 2 as shown in FIG. 1, FIG. 2, FIG. 4, FIG. 5 and FIG. 8, or is provided with a convex type surface having a horizontal top surface 1 and an aslant peripheral side surface 2a as shown in FIG. 9 through FIG. 13, and an enclosing frame 3 is provided on the circumference of the outside which rises in a direction identical with a direction where the convex type surface rises, and a groove 5 for packing is provided on the bottom surface of the enclosing groove portion 4 to be formed between the peripheral side surface 2 of the convex type surface and the enclosing frame 3.

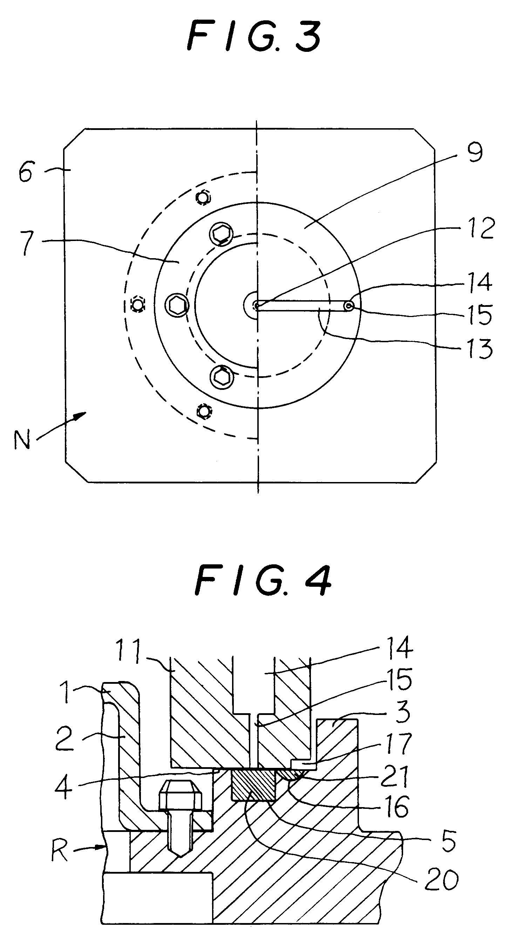

The rubber extruder N is constructed in such a way that a sprue bush 7 is integrally fixed to a base 6, and a runner block 9 is fitted to a concave surface portion 8 formed on a lower surface of the sprue bush 7 to be integrally superposed, and the runner block 9 has a concave surface portion 10 avoiding a convex type surface consisting of a horizontal top surface 1 of the lower mold R and a peripheral side surface 2 or an aslant peripheral side surface 2a and has a projecting frame portion 11 extending to the enclosing groove portion 4 of the lower mold R, and the lower surface of the projecting frame portion 11 forms a division surface by being in contact with the bottom surface of the enclosing groove portion 4, and on the upper surface of the runner block 9, as shown in FIG. 3, a vertical runner 14 is provided which runs through the projecting frame portion 11 from one horizontal runner 13 communicating with the sprue 12, and a gate 15 communicating with the groove portion 5 for packing of the lower mold R is provided on the tip of the vertical runner 14.

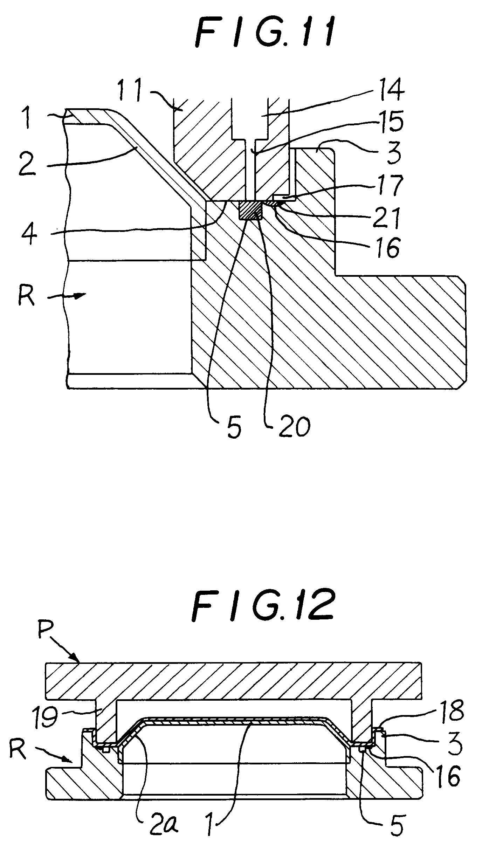

On the division surface between the enclosing groove portion 4 of the lower mold R and the projecting frame portion 11 of the rubber extruder N, as shown in FIG. 4 or FIG. 11, a vent standing groove 15 whose cross section is of saucer type is provided along an entire outside edge in contact with the groove portion 5 for packing provided on the bottom surface of the enclosing frame portion 4, and a vent groove 17 communicating with almost a middle of the vent standing groove 16 is provided on the lower surface of the projecting frame portion 11.

The lower mold R is made to shift to a position to be coupled with the rubber extruder N, and when the rubber extruder N is coupled with the lower mold R, the gate 15 is positioned to be communicated with the groove portion 5 for packing while the lower surface of the projecting frame portion 11 contacts the bottom surface of the enclosing groove portion 4, and the rubber composition of proper amount is positively and uniformly filled in the groove portion 5 for packing with a properly calculated pressure by means of the gate 15 from the runners 13, 14. When the filling of the rubber composition is over, the rubber extruder N is separated, and then, the lower mold R filled with the rubber composition is made to shift to a position where it is coupled with the upper mold for diaphragm forming to become the lower mold for diaphragm forming. Namely, unvulcanized diaphragm forming film 18 is mounted on the upper surface of the lower mold R before the coupling with the upper mold P, and the upper mold P and the lower mold R are coupled.

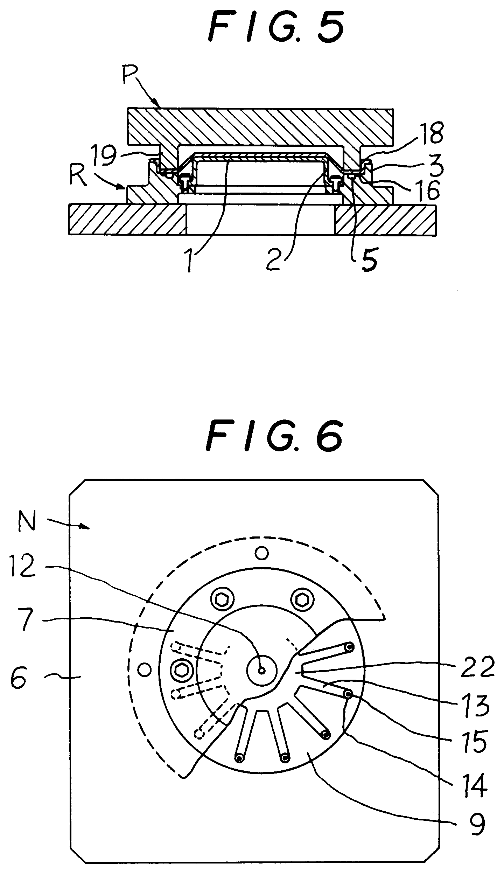

The upper mold P, as shown in FIG. 5 or FIG. 12, has a pressure portion 19 to be an integral unit, and a portion of the diaphragm of the diaphragm forming film 18 which becomes a horizontal peripheral surface c is pressed by the enclosing groove portion 4 of the lower mold R by means of the pressure portion 19 of the upper mold P, and a heat treatment of the film at low temperature for long hours is taken place in the condition where it is in contact with the horizontal top surface 1 of the lower mold R, and a thermal contraction is caused on the base cloth of the diaphragm forming film 18 and the packing 20 and the rubber layer of the diaphragm forming film 18 is vulcanized, and the packing 20 is integrally fixed to a position where it becomes the horizontal peripheral surface c of the diaphragm forming film 18. Also, a vent 21 of the vent standing groove 16 is fixed to the diaphragm forming film 18 together with the packing 20, but an excess portion may be easily cut off by utilizing a border between the packing 20 and the vent 21, and a diaphragm of profile as shown in FIG. 1 is molded.

FIG. 6 shows another rubber extruder according to this invention, and a description thereof will be made by attaching same numbers to same parts names. In this embodiment, the pouring is taken place from a large number of gates through a large number of locations so that a circular runner 22 of a preset radius centering the sprue 12 are provided on the upper surface of the runner block 9 superposed on the sprue bush 7, and a large number of horizontal runners 13 are radially provided from the circular runner 22, and a vertical runner 14 passing through the projecting frame portion 11 is connected to each horizontal runner 13, and a gate 15 communicating with the groove portion 5 for packing of the mold R for forming is provided at the tip of each vertical runner 14, and the rubber composition for packing is poured and filled from a large number of locations at fixed intervals to the groove portion 5 for packing of the mold R for forming, whereby the pouring time of the rubber composition is shortened and the uniform filling is obtained.

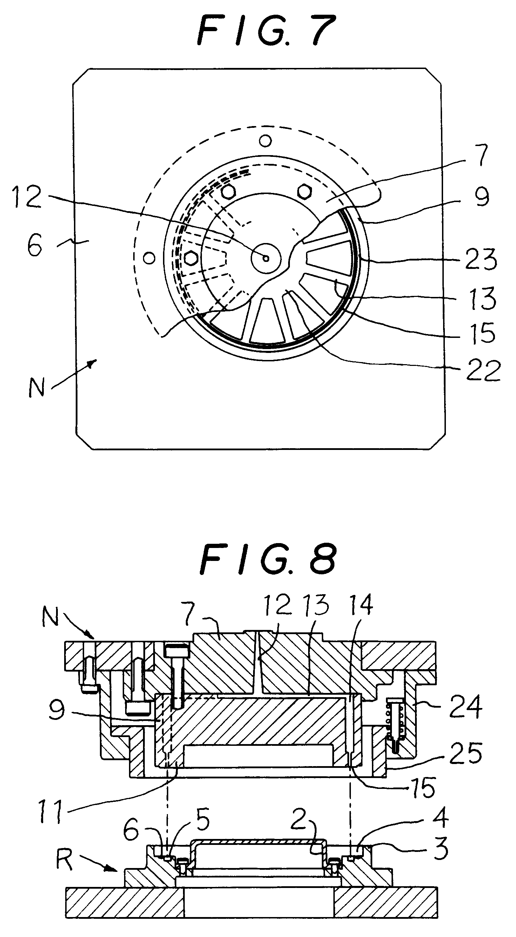

FIG. 7 shows another rubber extruder according to this invention, and in this embodiment, the pouring is made through the gate that becomes the slit that circles the packing groove portion, and the circular runner 22 having a preset radius centering the sprue 12 is provided on the upper surface of the runner block 9 superposed integrally on the sprue bush 7, and a large number of horizontal runners 13 are radially provided from the circular runner 22, and these large number of the horizontal runners 13 are provided as the circular and vertical runners 13 circling the inside of the projecting frame portion 11 by connecting each tip endlessly, and a gate 24 of the circular slit communicating with the entire packing groove of the lower mold R is provided.

FIG. 8 or FIG. 13 shows another rubber extruder according to this invention, and in this embodiment, the outer periphery of the runner block is arranged to be enclosed with the vacuum block, and a vacuum block 24 for mobile is provided on a vacuum block 23 for stationary fixed integrally with the base 1, and when it is coupled with the mold R for forming, the uniform filling of the rubber composition for packing can be positively taken place by vacuumizing the inside of the rubber extruder N.

Accordingly, in this invention, when the rubber extruder is coupled with the lower mold for diaphragm forming, the division surface is formed by the lower surface of the projecting frame portion of the runner block and the bottom surface of the enclosing groove portion of the lower mold which are in contact, and the gate is positioned to be communicated with the groove portion for packing. When the rubber composition of a preset amount is poured with a preset pressure, the unvulcanized rubber composition for packing is positively filled in the groove portion for packing, and thus, the unvulcanized packing is molded. Next, the unvulcanized diaphragm forming film is mounted on the lower mold in the condition where the unvulcanized packing is molded and filled, and the upper mold is coupled with the lower mold to perform the heat treatment at low temperature for long hours whereby the packing and the vent are integrally fixed at a position where it becomes the horizontal peripheral surface of the diaphragm, and the diaphragm of high precision provided with the uniform packing can be obtained. Namely, the rubber composition to be filled in the lower mold is unvulcanized rubber material similar to the rubber material of the diaphragm forming film so that it is the most preferable vulcanizing system of this kind which allows the wlcanization of both the packing and the diaphragm forming film at low temperature for long hours. Also, the lower mold becomes the packing forming mold by being coupled with the rubber extruder, and then, it becomes the diaphragm forming mold by being coupled with the upper mold for diaphragm forming, and the forming of the packing and the forming of the diaphragm can be taken place as a series of operation.

The vent is serially provided on the outer periphery of the packing provided on the horizontal periphery of the diaphragm molded by the foregoing method, but the desired diaphragm may be obtained by separating it at the border of the vent. The vent facilitates the easy separation at the border with the packing.

By the way, the circular runner centering the upper surface sprue of the runner block permits the provision of a large number of horizontal runners, and filling intervals of the rubber composition to the groove portion for packing can be made shorter by the large number of the runners, and as a result, the shorter filling time of the rubber composition and the uniform filling become feasible. Furthermore, when the vacuum block is coupled with the lower mold, the uniform filling of the rubber composition for packing can be positively taken place by vacuumizing the inside of the rubber extruder. Namely, the diaphragm of high precision provided with the packing of uniform width and thickness can be provided.

Moreover, as long as the rubber extruder may be able to pour and fill the unvulcanized rubber composition for packing in the entire packing groove 5 of the lower mold R for diaphragm forming, such rubber extruders are not required to be in accordance with the structure shown in the embodiment of this invention, and any proper rubber extruders may be employed as a matter of course.

This invention has the foregoing construction and the unvulcanized rubber composition for packing is directly poured and filled in the groove portion for packing of the lower mold for diaphragm forming by means of the rubber extruder prior to the forming of the diaphragm to cause the forming, and then, the lower mold and the upper mold for diaphragm forming are coupled to apply a heat treatment to the unvulcanized diaphragm forming film and the unvulcanized rubber composition for packing so that the vulcanization material most suitable for the rubber diaphragm of this kind is used, which allows the vulcanization at low temperature for long hours, and therefore, the diaphragm of high precision provided with the uniform width and thickness can be provided, and also, the lower mold for diaphragm forming becomes the mold for packing forming by being coupled with the rubber extruder, and then, it is coupled with the upper mold for diaphragm forming to become the mold for diaphragm forming, and the forming of the packing and the forming of the diaphragm can be continuously and serially accomplished and as a result, a productivity can be improved which is some of the advantageous points of this invention.

## Claims

1. A method of forming a gas meter diaphragm having a flat top surface (a), a peripheral side surface (b) depending from the top surface (a), a horizontal peripheral surface (c) extending from the side surface (b) and a packing (d) integrally fixed on one surface of the horizontal surface (c), the method comprising the steps:-
(i) filling a packing forming groove (5) contained in a lower mold (R) with an unvulcanized rubber composition (20), the lower mold (R) having a horizontal top surface (1), peripheral side surface (2) of vertical or aslant type, an enclosing frame (3) surrounding the side surface (2), and an enclosing groove (4) formed between said peripheral side surface (2) and the enclosing frame (3), the enclosing groove (4) including said packing forming groove (5) into which said unvulcanized rubber is filled;
(ii) mounting a heat curable diaphragm forming film (18, 118) on said lower mold (R) so as to extend across said top surface (1) and enclosing groove (4);
(iii) applying pressure to press the diaphragm forming film into contact with the enclosing groove (4) and said unvulcanized rubber composition (20) located in the packing forming groove (5) and to contact said top surface (1) and peripheral side surface (2);
(iv) applying heat treatment to the film and unvulcanized rubber composition to cure both the film and rubber composition and integrally connect them together.

2. A method according to claim 1 wherein the lower mold (R) is movable, the method further including moving the lower mold into cooperation with an upper rubber filling mold (N), filling said packing forming groove (5) with said unvulcanized rubber composition (20), and subsequently moving the filled lower mold (R) into co-operation with an upper diaphragm forming mold (P) for applying said pressure to the diaphragm forming film.

## Patentansprüche

1. Verfahren zum Formen einer Membrane für ein Gasmeßgerät, wobei die Membrane eine flache obere Oberfläche (a), eine umlaufende seitliche Oberfläche (b), eine horizontale umlaufende und an die seitliche Oberfläche (b) anschließende Oberfläche (c) und eine Dichtung (d) als integralen Bestandteil an der horizontalen Oberfläche (c) aufweist und das verfahren folgende Schritte umfasst:
(i) Füllen einer die Dichtung bildenden Vertiefung (5) in einer Unterform (R) mit einer Mischung (20) aus unvulkanisiertem Gummi, wobei die Unterform (R) eine horizontale Oberfläche (1), eine umlaufende seitliche vertikal oder geneigt verlaufende Oberfläche (2), einen die seitliche Oberfläche (2) umgebenden Rahmen (3) und einen vertieften Bereich (4) zwischen der umlaufenden seitliche Oberfläche (2) und dem Rahmen (3) aufweist und der vertiefte Bereich (4) die die Dichtung bildende Vertiefung (5) aufweist, in die der unvulkanisierte Gummi eingebracht wird;
(ii) Montieren einer hitzehärtbaren membranbildenden Folie (18, 118) auf der Unterform (R), sodaß diese sich über die obere Oberfläche (1) und den vertieften Bereich (4) erstreckt;
(iii) Aufbringen von Druck, um die membranbildende Folie in Kontakt zu dem vertieften Bereich (4) und der Mischung (20) aus unvulkanisiertem Gummi zu bringen, die in der die Dichtung bildende Vertiefung (5) angeordnet ist, und den Kontakt zwischen der oberen Oberfläche (1) und der seitlich Oberfläche (2) herzustellen;
(iv) Anwendung einer Wärmebehandlung auf die Folie und die Mischung (20) aus unvulkanisiertem Gummi, um sowohl die Folie als auch die Gummimischung auszuhärten und zu einem integrierten Teil miteinander zu verbinden.

2. Verfahren nach Anspruch 1, wobei die Unterform (R) beweglich ausgebildet ist und das Verfahren vorsieht, die Unterform in Wirkverbindung mit einer oberen Form (N) zum Einbringen des Gummis zu bringen, die die Dichtung bildende Vertiefung (5) mit der Mischung (20) aus unvulkanisiertem Gummi zu füllen und nachfolgend die gefüllte Unterform (R) in Wirkverbindung mit einer membranbildenden Oberform (P) zu bringen, um Druck auf die membranbildende Folie auszuüben.

## Revendications

1. Procédé de formation d'une membrane pour compteur à gaz, ayant une surface supérieure plate (a), une surface latérale périphérique (b) partant de la surface supérieure (a), une surface périphérique horizontale (c) s'étendant à partir de la surface latérale (b), et une garniture d'étanchéité (d) fixée d'un seul tenant sur une surface de la surface horizontale (c), le procédé comprenant les étapes de :
(i) remplissage d'une rainure de formation de garniture (5), située dans un moule inférieur (R), avec une composition de caoutchouc non vulcanisé (20), le moule inférieur (R) ayant une surface supérieure horizontale (1), une surface latérale périphérique (2) du type vertical ou oblique, un châssis enveloppant (3) entourant la surface latérale (2), et une rainure enveloppante (4) formée entre ladite surface latérale périphérique (2) et le châssis enveloppant (3), la rainure enveloppante (4) incorporant ladite rainure de formation de garniture (5) dans laquelle est coulé ledit caoutchouc non vulcanisé ;
(ii) montage d'une pellicule thermodurcissable de formation de membrane (18, 118) sur ledit moule inférieur (R) de telle manière qu'elle s'étende sur toute la surface supérieure (1) et la rainure enveloppante (4) ;
(iii) application de pression pour presser la pellicule de formation de membrane et l'amener en contact avec la rainure enveloppante (4) et ladite composition de caoutchouc non vulcanisé (20), située dans la rainure de formation de garniture (5), et pour venir en contact avec ladite surface supérieure (1) et ladite surface latérale périphérique (2) ;
(iv) application d'un traitement thermique à la pellicule et à la composition de caoutchouc non vulcanisé afin de durcir à la fois la pellicule et la composition de caoutchouc et les relier ensemble d'un seul tenant.

2. Procédé selon la revendication 1, dans lequel le moule inférieur (R) est mobile, le procédé comprenant en outre le déplacement du moule inférieur pour qu'il vienne coopérer avec un moule supérieur de remplissage avec du caoutchouc (N), le remplissage de ladite rainure de formation de garniture (5) avec ladite composition de caoutchouc non vulcanisé (20) et, ensuite, le déplacement du moule inférieur (R) rempli pour qu'il vienne coopérer avec un moule supérieur de formation de membrane (P), pour l'application de ladite pression à la pellicule de formation de membrane.
